# EUROPEAN PATENT SPECIFICATION

(11) **EP 4 029 711 B1**
(45) Date of publication and mention of the grant of the patent: **03.01.2024**
(21) Application number: 22151462.3
(22) Date of filing: 13.01.2022
(51) Int. Cl.: B60K 6/442, B60K 6/405, B60K 6/40, B60K 6/36, B60K 6/547, B60K 6/52, B60K 17/04, B60K 17/28

(54) **FRONT HYBRID DRIVING AXLE FOR AN AGRICULTURAL VEHICLE**
HYBRIDANTRIEBSVORDERACHSE FÜR EIN LANDWIRTSCHAFTLICHES FAHRZEUG
ESSIEU MOTEUR AVANT HYBRIDE POUR UN VÉHICULE AGRICOLE

(30) Priority: 14.01.2021 IT 202100000608
(43) Date of publication of application: 20.07.2022
(73) Proprietor: CNH Industrial Italia S.p.A., 10156 Torino (IT)
(72) Inventor: Borghi, Alberto, 42033 Carpineti (IT); Pellizzari, Piero, 73024 Maglie (IT); Sedoni, Enrico, 41126 Modena (IT); Jensen, Michael, Lockport, 60441 (US); Forte, Michelantonio, 41100 Modena (IT)
(74) Representative: CNH Industrial IP Department

(56) References cited:
- EP-A1- 3 109 082
- EP-A1- 3 702 191
- US-A1- 2015 210 151

## Description

### TECHNICAL FIELD

The present invention concerns a driving axle arrangement for an agricultural vehicle, in particular a hybrid driving axle for a tractor.

### BACKGROUND OF THE INVENTION

Reduction of automotive fuel consumption and emissions is an ongoing process that involves more and vehicles, including agricultural and work vehicles, powered either entirely or in hybrid fashion by electric machines.

In general, hybrid/electrified vehicles differ from conventional internal combustion powered motor vehicles in that they are powered, at least in part, by one or more electric machines, as shown in EP3702191A1.

Such electric machines occupy a significant space and may be arranged, if present, far from the internal combustion engine.

However, the re-arrangement of the elements of the axle in the transmission vehicle would mean to update globally the design of the vehicle thereby incurring in high costs.

Moreover, each agricultural vehicle configuration has different typology of gearbox and therefore each gearbox configuration would need a specific reconfiguration of the hybrid vehicle.

Therefore, the need is felt to provide a hybrid axle design whereby one or more electric motors are coupled to a drive axle of a vehicle that are reduces product complexity and cost-effective in order to optimize the space of installation.

An aim of the present invention is to satisfy the above mentioned needs in an optimized and cost-effective way.

### SUMMARY OF THE INVENTION

The aforementioned aim is reached by a transmission group, a hybrid driving axle arrangement and a vehicle as claimed in the appended independent claims.

Preferred embodiments of the invention are realized according to the claims dependent on or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is schematic lateral view showing an agricultural vehicle provided with a hybrid driving axle according to the invention;
- Figure 2 is a schematic representation of the transmission architecture of the hybrid electric axle according to the invention;
- Figure 3 is a front perspective view of the hybrid axle according to the invention with parts removed for sake of clarity;
- Figure 4 is a rear perspective view of the hybrid axle according to the invention with parts removed for sake of clarity;
- Figure 5 is a bottom view of the hybrid axle according to the invention;
- Figure 6 is a lateral side view of the hybrid axle according to the invention with parts removed for sake of clarity;
- Figure 7 is a sectional view of the hybrid axle with respect to line VII-VII of figure 6;
- Figure 8 is a perspective view of the transmission architecture schematized in figure 2; and

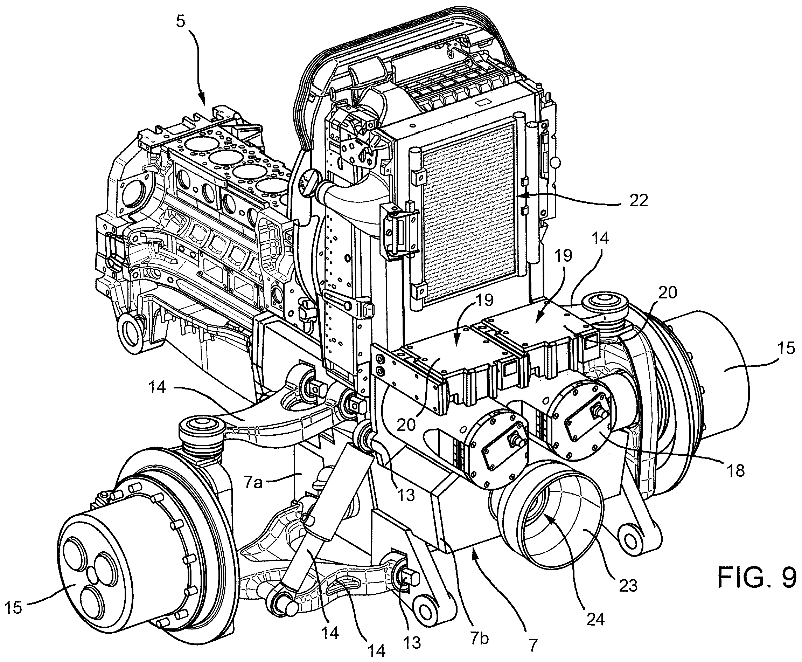

- Figure 9 is a perspective view of a hybrid axle according to a further embodiment of the present invention.

### DETAILED DESCRIPTION OF THE INVENTION

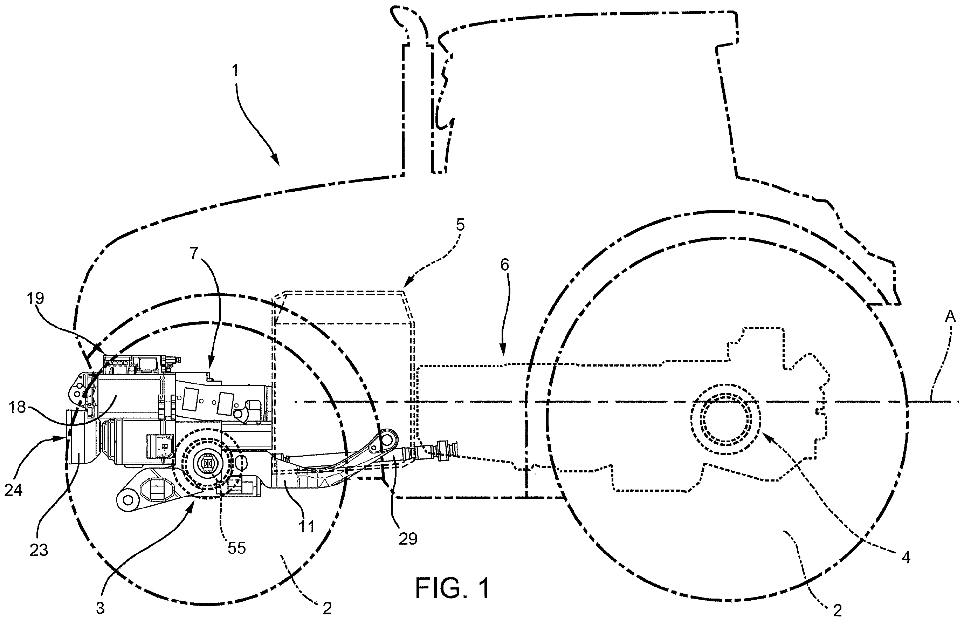

Figure 1 discloses a work vehicle 1 such as a tractor provided with a front axle 3 and a rear axle 4 that are movable with respect to the ground thanks, e.g. to wheels 2.

The vehicle 1 is provided with an internal combustion engine 5 and a rear transmission module 6 that is operatively interposed between the internal combustion engine 5 and the rear axle 4.

According to the invention, the front axle 3 is a hybrid driving axle, as described in the following, that is operatively connected to a plurality of electric machines 18, to the internal combustion engine 5 and to rear transmission module 6.

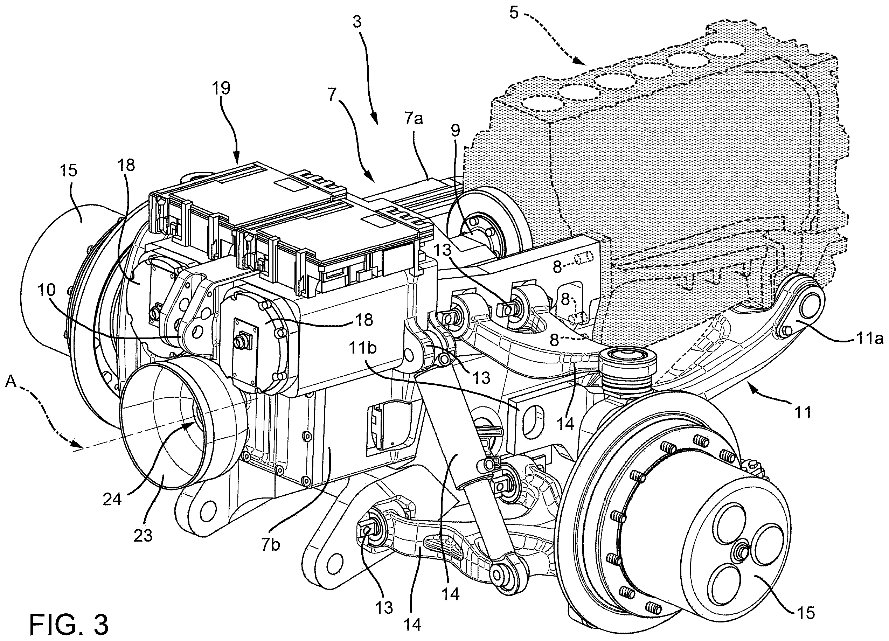

Making reference to figures 3, 4 and 5 the hybrid axle 3 comprises a housing 7 that is configured to be fixed to the housing of internal combustion engine 5. In particular, the housing 7 defines a plurality of openings 8 configured to house fixing means, not shown, such as threaded elements to fix the housing to the internal combustion engine 5.

In particular, such openings 8 are realized about axes that are parallel to a longitudinal axis A of the internal combustion engine 5, i.e. an axis that is parallel to an output shaft 9 of the internal combustion engine 5. More preferably, the housing 7 extends transversally to axis A similarly to the internal combustion engine 5, thereby defining together the same transversal encumbrance.

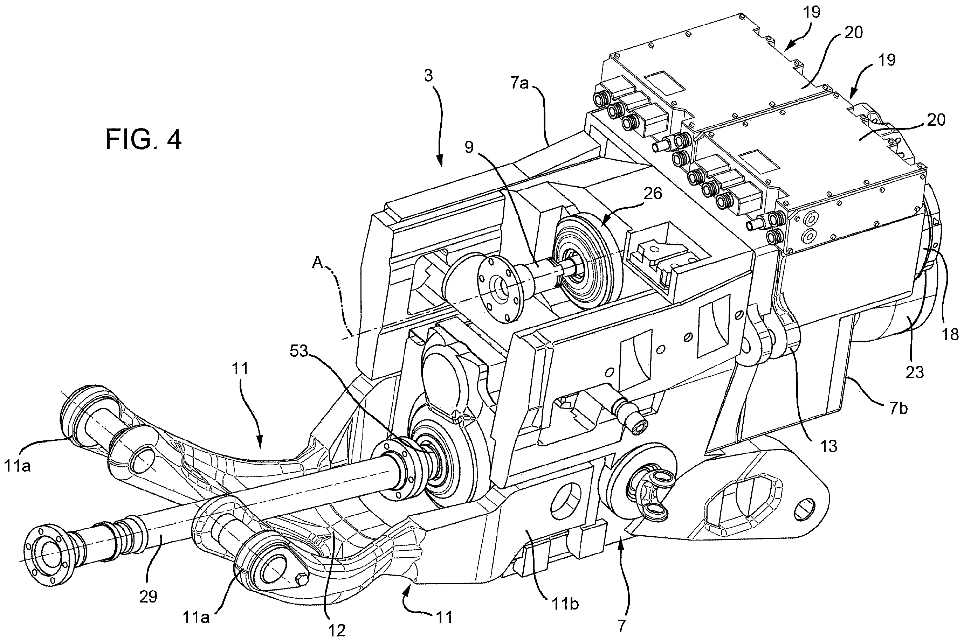

According to the invention, the housing 7 is furthermore connected to internal combustion engine 5 via a pair of lateral arms 11, namely a right and a left arm with respect to axis A. As better shown in figure 4, each arm 11 defines an inner portion 11a coupled to internal combustion engine 5 and an outer portion 11b coupled to the housing 7.

In greater detail, the inner portion 11a defines at least one opening that allows the fixation of the inner portion 11a to the housing 7.

Preferably, lateral arms 11 are connected together via a transversal member 12 that is substantially at the same height of the bottom of the housing 7. More preferably, the inner and outer portions 11a, 11b are positioned at a different height, i.e. the outer portion 11b is positioned near the bottom of the housing 7, i.e. near the transversal member 12, while the inner portion 11a is positioned on the internal combustion engine at a greater height. Accordingly, they are inclined and, preferably, in the described embodiment, curved with the convex portion faced to ground.

Moreover, the housing 7 may be realized in two portions, namely an inner portion 7a that is faced to the internal combustion engine 5 and an outer portion 7b connected to the inner portion 7a on the opposite side with respect to internal combustion engine 5.

Housing 7 defines support points 13 for allowing the connection of suspension elements 14 configured to support a wheel hub 15 of the axle 3.. In the disclosed embodiment both portions 7a, 7b defines support points 13 and the wheel hub 15 is carried in suspended way but it is clear that may be directly connected, e.g. via a fixed connection element, to at least one of portions 7a, 7b of housing 7.

Housing 7 may furthermore define a further support point 10. In the disclosed embodiments, such support point 10 is carried by housing 7a substantially along axis A. Support point 10 is configured to allow the connection of a front lifting system actuator, not shown, and may be realized via a pair of parallel flanges integrated in housing 7a.

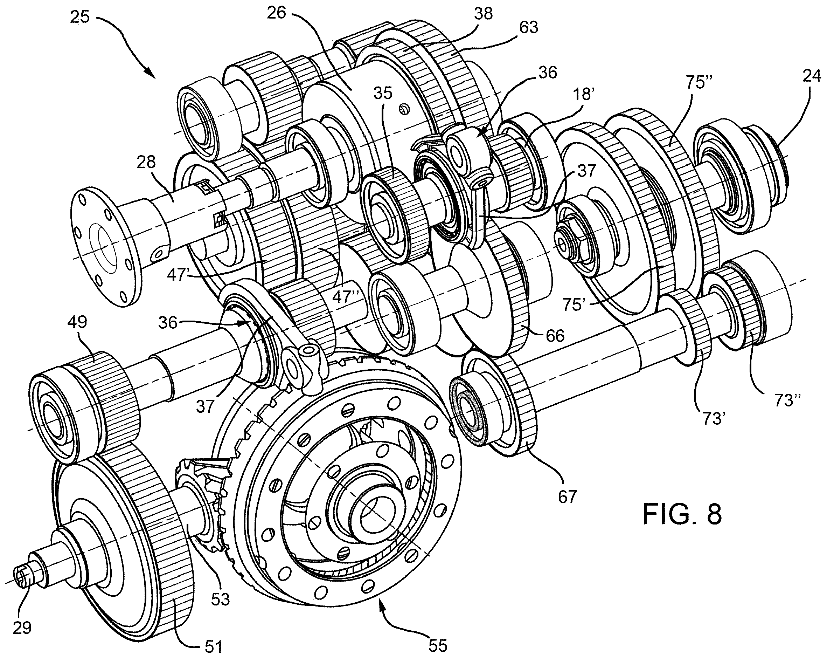

According to the embodiment shown in figure 3, 4 and 5 the housing 7 defines an inner space 17 configured to house at least a pair of electric machines 18. According the alternative embodiment of figure 8, the housing 7 is not shaped so that the inner space 17 may contain the electric machines 18, i.e. electric machines 18 are coupled to the housing 7 but not integrated therein.

The electric machines 18 are electrically connected one with respect to the other. In particular, the axle 3 further comprises electronic control means 19, such as inverters 20, configured to electrically connect and control the operation of the electric machines 18. In the embodiment of figure 3,4 and 5 such electronic control means 19 are integrated to the housing 7, while in the embodiment of figure 8 they are realized as separate elements fixed to the housing 7.

It may be appreciated that in both embodiments the electric machines 18 and electronic control means 19 are placed on the opposite of the internal combustion engine 5, i.e. integrated or fixed to the outer portion 7b of housing 7.

Clearly, the electric machines 18 and electronic control means 19 are electrically connected together. Such electric connection maybe realized via usual electric cables or, more advantageous, by means of specific power bars.. In the embodiment of figures 3 to 5, wherein the electric machines 18 and electronic control means 19 are integrated into housing 7, such cables/power bars are all housed in inner space 17, and fixed to the latter according the specific design requested by the technology"..

Furthermore, is noticed that inner portion 7a of housing 7 has vertically a lower extension with respect to outer portion 7b thereby allowing the fixation of cooling means 22 for cooling the internal combustion engine 5 (shown only in the embodiment of figure 8 for sake of clarity).

The front axle 3 may further comprises protection cover 23 placed on outer portion 7b for protecting a Front Power Take-Off, FPTO, 24.

As said, the front axle 3 is operatively connected to internal combustion engine 5, rear transmission 6 and electric machines 8. Such connection is achieved via transmission group 25 that is housed in inner space 17. If present, also FPTO 24 is operatively connected to such transmission group 25.

In particular, the transmission group 25 is operatively connected to internal combustion engine 5 via coupling means 26 such as a clutch 27 that is operatively interposed between the output shaft 9 of internal combustion engine 5 and a first shaft 28 of the transmission group 25. The transmission group 25 is operatively connected to rear transmission arrangement 6 via a shaft, e.g. a jackshaft 29, that is configured to be coupled to a second shaft 31 of the transmission group 25 and to transfer the torque provided by output shaft 31 to an output shaft 32 of the rear transmission arrangement 6.

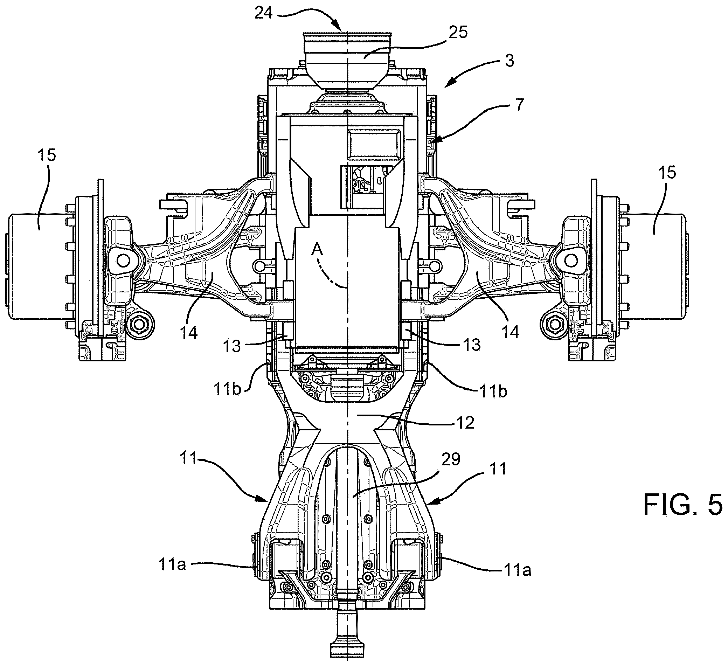

In greater detail, as appreciated in figure 4 and 5, the jackshaft 29 is arranged between lateral arms 11 and above transversal member 12 and extends, parallel to axis A, over underneath the internal combustion engine 5 to transmission 6.

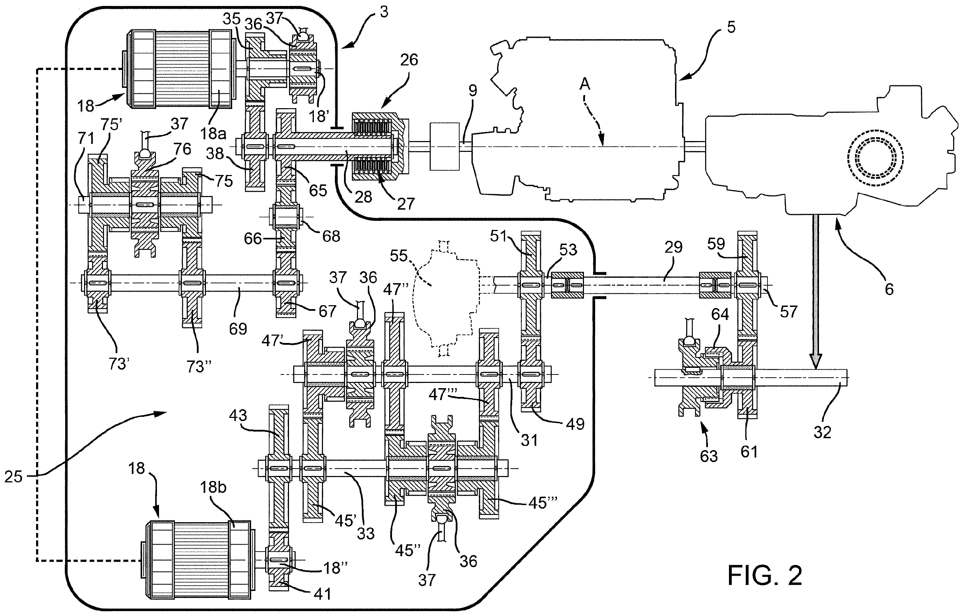

Making reference to figure 2, the transmission group 25 in detail comprises a first electric machine 18a selectively coupled to internal combustion engine 5 via coupling means 26 and a second electric machine 18b coupled via a third shaft 33 to output shaft 31.

In detail, the first electric machine 18a may be provided with an output shaft 18' that carries, in a rotatably free manner, a first output gear wheel 35 that may be engaged in rotation to output shaft 18' thanks to a selector 36, such as a dog clutch that can be actuated thanks to an actuator 37 such as an electro-mechanic actuator.

The first output gear wheel 38 is configured to cooperate with a first intermediate gear wheel 39 that is carried, engaged at rotation, with the first shaft 28 of the transmission group 25.

The second electric machine 18b may be provided with an output shaft 18'' that carries, engaged at rotation, a second output gear wheel 41, engaged in rotation to output shaft 18" and configured to mesh with a second intermediate gear wheel 43 that is carried by the third shaft 33.

The third shaft 33 carries at least a wheel 45 configured to mesh with a corresponding gear 47 carried by second shaft 31. In the disclosed embodiment, the second shaft 31 carries three gear wheels 47', 47'', 47‴ configured to alternatively mesh with respective gear wheels 45', 45'', 45‴ carried by the third shaft 33. In particular, the previously mentioned gears have different diameters thereby engaging defining three different gear ratios between the second and third shafts 31, 33. The choice between a specific gear ratio may be achieved via a selector 36 controlled by an actuator 37 as previously described.

Exempli gratia, a first gear wheel 45' of the third shaft 33 may be carried engaged in rotation therewith and the second and third gear wheels 47'', 47'' of the second shaft 31 may be carried engaged in rotation therewith. The corresponding gears, i.e. the first wheel 47' carried by the second shaft 31 and the second and third gear wheels 45'', 45‴ carried by the third shaft 33 may be carried in a rotationally free manner. As represented for sake of example, a selector 36 may be placed near gear 47' and a further selector 36 may be placed between gears 45'', 45‴.

The second shaft 31 carries a further gear 49 rotationally engaged therewith and configured to mesh with a gear 51 that is rotatably engaged with a fourth shaft 53.

The fourth shaft 53 engages with a front differential assembly 55 configured to split the torque between the wheel hubs 15, as per se known and with the jackshaft 29.

The jackshaft 29 is connected to a fifth shaft 57 that carries, engaged at rotation, a gear wheel 59 that is configured to mesh with a gear wheel 61 carried, in a rotationally free manner by rear transmission shaft 32. The gear wheel 61 can be engaged at rotation with rear transmission shaft 32 thanks to coupling means 63 such as a dog clutch 64.

As said, the front axle 3 may be provided with a FPTO 24. In such case, the first shaft 28 carries, engaged at rotation therewith, a further gear 65 configured to mesh with a corresponding gear 67 carried by a sixth shaft 69. Preferably, the gears 65 and 67 may mesh thanks to the presence of an intermediate gear 66 carried in rotation by an intermediate shaft 68.

The sixth shaft 69 is operatively coupled to a FPTO shaft 71. Preferably, the sixth shaft 69 carries at least a wheel 73 configured to mesh with a corresponding gear 75 carried by FPTO shaft 71. In the disclosed embodiment, the sixth shaft 69 carries two gear wheels 73', 73" configured to alternatively mesh with respective gear wheels 75', 75" carried by the FPTO shaft 71.

In particular, the previously mentioned gears have different diameters thereby engaging defining two different gear ratios between the sixth and FPTO shafts 69, 71. The choice between a specific gear ratio may be achieved via a selector 36 controlled by an actuator 37 as previously described. In particular, selector 36 is interposed between gears 75', 75'' that are rotatably free carried on FPTO shaft 71 while gears 73', 73" are rotatably engaged with sixth shaft 69.

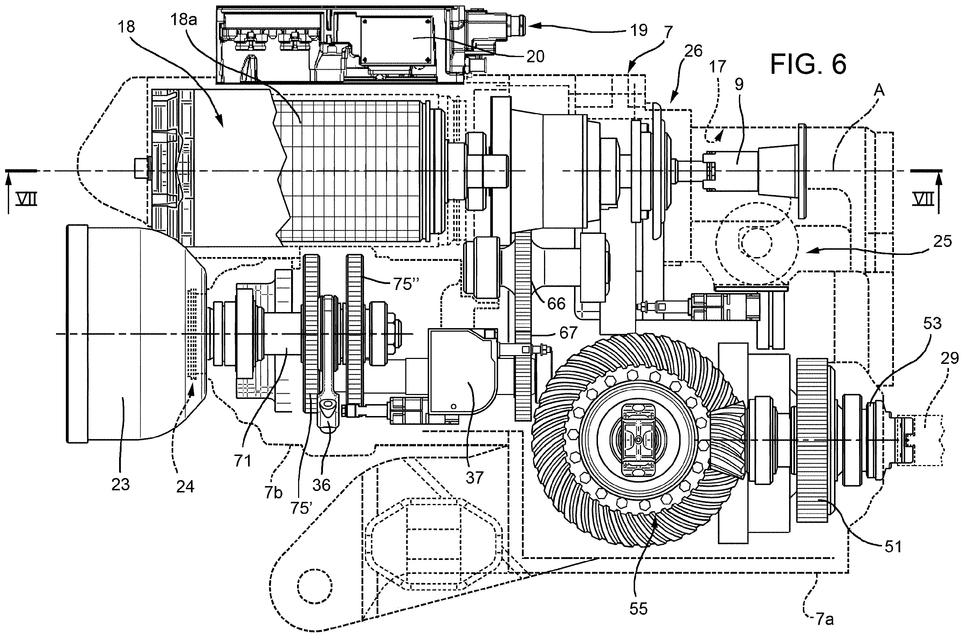

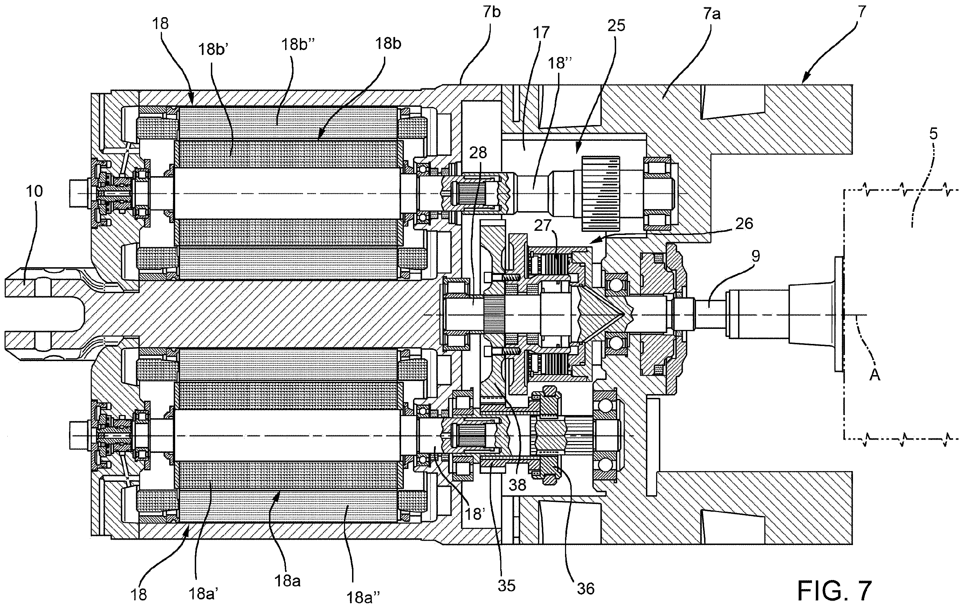

As can be seen in figures 6 and 7 the electric machines 18a, 18b are placed over the transmission group 25 between the FPTO 24 and the differential assembly 55 and, furthermore, they are placed symmetrically with respect to axis A and at the same height.

In particular, it is noticed that electric machines 18a, 18b comprises respective rotors 18a', 18b' that are coupled to the respective output shaft 18', 18" and respective stators 18a", 18b'' that are rigidly carried internally with respect to outer portion 7b of housing 7.

In particular, they are housed in a specific non structural inner housing (not shown) positioned in space 17 and carried to housing 7 in order to decrease the transmission of axle loads to electric machines 18. This housing is furthermore configured to house the aforementioned cables and a cooling system (not shown) for the electric machines, according the needs of the electric machines.

All the shafts that are included in the transmission group 25 are parallel one with respect to the other and with respect to axis A. Consequently, the axis of the electric machines 18 are parallel to the axis of the shafts of the transmission group 25.

Clearly, the transmission group 25 further comprises other mechanical elements such as bearings, shoulders, O-rings and other known mechanical elements used for mounting the above mentioned structure of gears and shafts comprises by the transmission group 25.

The operation of the hybrid driving axle 3 according to the invention described above is the following.

Generally, the internal combustion engine 5 carries in rotation the shaft 9 and, on the opposite side and as known, the transmission 6 that provides torque to the rear transmission shaft 32 according to the ratio necessity of the vehicle. For sake of example, transmission 6 may be realized as described in WO 2020148452 A1.

On the opposite side when the coupling means 26 couple together shafts 28 and 9 and when the selector 36 couples shaft 18' to gear 35 the torque passes via gearings 38 and 35 to the first electric machine 18a. This latter may therefore work as generator, i.e. receiving mechanical energy and providing electrical energy.

In particular, such electrical energy may be used by the second electric machine 18b (or stored for further use) that provides torque to shaft 18''. The torque passes via gearing between gears 41 and 43 to shaft 33. There, the user may select one gear ratio between the one defined by the coupling of gears 45' and 47' or 45'' and 47" or 45‴ and 47‴. The torque then passes through the selected gear ratio to shaft 31 and via meshing of gears 49 and 51 to shaft 53.

This latter is connected to front differential 55, that provides torque to the front axles of the axle 3 and to jackshaft 29.

If the users selects a four drive wheels modality, the coupling means 63 may allow the engagement of wheel 61 with rear transmission shaft 32 thereby allowing torque transmission from jackshaft 29 to rear transmission shaft. In such case the torque provided by the jackshaft 29 is summed to the torque provided by the transmission 6. In case the transmission 6 is not engaged, the vehicle 1 will be provided with a totally electric four-drive traction thanks to the above configuration.

If the FPTO 24 is present, it is possible to foresee two different operational conditions.

In a first possible operative condition, it may be assumed, as described above, that the engine shaft 9 is coupled to shaft 28 and that the selector 36 couples shaft 18' to wheel 35. In such configuration the torque provided by shaft 9 is divided between the first electric machine 18a, as described above, and, via meshing of gears 65, 66 and 67 to shat 69. By selecting a proper gear ratio between the gear couplings 73' and 75' or 73" and 75", it is possible to vary the torque provided to FPTO shaft 71. If the selector 36 does not couple shaft 18' to wheel 35, the entire torque provided by engine shaft 9 is directed towards the FPT shaft 71 because gear 35 rotates freely on shaft 18'.

In a second possible operative condition, it may be assumed that the shaft 9 is not coupled to shaft 28. Accordingly, only electric machine 18a, that in such case works as electric motor may provide torque via gears 35, that is engaged to shaft 18', and 38, the gearings defined by wheels 65, 66 and 67 and via one of the ratio defined by gear couplings 73' and 75' or 73'' and 75'' .

In such operative condition, the electrical energy to first electric machine 18a is provided by battery means or may be provided by second electric machine 18b that works as generator carried by torque arriving from rear transmission shaft 32 via jackshaft 29.

In view of the foregoing, the advantages of the transmission group, the front hybrid driving axle according to the invention and vehicle comprising this latter are apparent.

The provided front hybrid driving axle has a very compact and small dimension, thereby allowing the use in substitution of existing standard axles.

Moreover, as shown, the front hybrid driving axle may be used both in conventional arrangement with respect to front hub wheels or in an independent suspended way.

Furthermore, electrical elements may be housed separately of integrated into the housing of the front hybrid driving axle thereby protecting this latter from the vehicle environment. Such latter solution is clearly more simple and safe.

In a very small space the front hybrid driving axle comprises the gearings to define the FPTO, the front differential and the transmission between the electrical motor and the rear transmission.

Such compact transmission group arrangement has very few elements with respect to existing one. Moreover, the compactness in a very small space allow a good lubrication with a small amount of lubricant.

In the use of electrical actuators, the actuation of the transmission elements is very rapid and has low power absorption.

It is clear, furthermore, that it is possible to have an independent traction on the front axle with respect to the rear axle or, alternatively, a four driving wheel traction or, further, a standard rear traction, according to the need of the agricultural vehicle.

As demonstrated, according to the capacity of the battery provided in the vehicle, it is possible to move the agricultural vehicle 1 in a full electric configuration.

The configuration with electric motors carried by housing but separated thereof allows to reduce the load stresses that may be provided to these latter.

It is clear that modifications can be made to the described transmission group, front hybrid driving axle according to the invention and vehicle comprising this latter which do not extend beyond the scope of protection defined by the claims.

For example, it is clear, as said, that the wheel hubs 15 may be fixedly carried to the housing 7 instead of the suspended configuration disclosed in the present application.

Furthermore, the disclosed geometries and dimension are variable according to the typology of agricultural vehicle.

Moreover the disclosed gears and gearings may vary according to the necessity of the work vehicle, in particular gear wheels may be of any typology and vary in number. Similarly shaft may be disposed in a different way and vary in their number.

Clearly, it is possible to foresee more than two electric machines and their relative position may vary with respect to the transmission group elements. Moreover, as shown, the electric machines may be integrated, or separated, with respect to housing of the hybrid driving axle.

Moreover, the actuators shown in the present disclosure may be of any typology other than electro-mechanical, e.g. hydraulic or pneumatic.

## Claims

1. - Front hybrid driving axle (3) for an agricultural vehicle (1), said front hybrid driving axle (3) comprising:
- a housing (7) configured to be fixed to an internal combustion engine (5) of said agricultural vehicle and defining an inner space (17);
- at least a pair of electric machines (18) electrically connected one with respect to the other and an electric control unit (19) electrically connected to said machines (18) for managing the operation thereof, said at least a pair of electric machines (18) and electric control unit (19) being carried by said housing (7);
- a differential gearing (55) for providing torque to a pair of wheel hub (15) carried by said front hybrid driving axle (3); and
- a transmission group (25) comprising a plurality of gears and shafts housed in said inner space (17), said transmission group (25) operatively connecting said at least a pair of electric machine (18), said differential gearing (55) and said internal combustion engine (5);
said axle is **characterized in that** said housing (7) is connected to said internal combustion engine (5) via a pair of lateral arms (11), said lateral arms comprising first extremity portions hinged to said internal combustion engine (5) and second extremity portions fixed to said housing (7).

2. - Axle according to claim 1, wherein said pair of electric machines (18) is integrated into said housing (7).

3. - Axle according to claim 1 or 2, wherein said housing (7) comprises a first portion (7a) configured to be fixed to said internal combustion engine (5) and a second portion (7b) fixedly carried by said first portion (7a).

4. - Axle according to claim 3 when depending on claim 2, wherein said second portion (7b) defines a support for respective stators (18a", 18b") of said at least a pair of electric machine (18).

5. - Axle according to any of the preceding claims, wherein said at least a pair of electric machine (18) is carried by said housing (7) vertically above said transmission group (25).

6. - Axle according to any of the preceding claims, wherein said at least a pair of electric machine (18) is carried by said housing (7) symmetrically with respect to an output shaft (9) of said internal combustion engine (5).

7. - Axle according to any of the preceding claims, wherein said transmission group (25) is operatively connected to a rear transmission (6) of said vehicle via a jackshaft (29), said jackshaft (29) being placed under said internal combustion engine.

8. Axle according to claim 7, wherein said jackshaft (29) is laterally comprised within said lateral arms (11).

9. - Axle according to claim 3, wherein said second portion (7b) is placed on an opposite side of said first portion (7a) along a longitudinal axis of an output shaft (9) of said internal combustion engine (5) with respect to said internal combustion engine (5).

10. Axle according to any of said preceding claims, wherein said housing (7) carries a front power take-off (24), said front power take-off (24) being operatively connected to said transmission group (25).

11. - Axle according to claim 10 when depending on any of claims 3 or 9, wherein said front power take-off (24) is realized in said second portion (7b) vertically lower with respect to said at least a pair of electric machines (18).

12. - Axle according to any of said preceding claims, wherein said wheel hubs (15) are rigidly connected to said housing (7).

13. Axle according to claims 1 to 11, wherein said wheel hubs (15) are each carried in a suspended way with respect to said housing (7).

14. - Agricultural vehicle (1) comprising an internal combustion engine (5), a rear transmission (6) carried by such internal combustion engine (5) and a front hybrid driving axle (3) as claimed in any of the preceding claims.

## Patentansprüche

1. Hybridantriebsvorderachse (3) für ein landwirtschaftliches Fahrzeug (1), wobei die Hybridantriebsvorderachse (3) umfasst:
- ein Gehäuse (7), das dazu eingerichtet ist, an einem Verbrennungsmotor (5) des landwirtschaftlichen Fahrzeugs angebracht zu werden, und das einen Innenraum (17) definiert;
- mindestens ein Paar von elektrischen Maschinen (18), die elektrisch miteinander verbunden sind und eine elektronische Steuereinrichtung (19), die elektrisch mit den Maschinen (18) verbunden ist, um deren Betrieb zu steuern, wobei das mindestens eine Paar von elektrischen Maschinen (18) und die elektronische Steuereinrichtung (19) von dem Gehäuse (7) getragen werden;
- ein Differentialgetriebe (55) zum Bereitstellen von Drehmoment an ein Paar von Radnaben (15), das von der Hybridantriebsvorderachse (3) getragen wird; und
- eine Getriebegruppe (25), die eine Mehrzahl von Zahnrädern und Wellen umfasst, die in dem Innenraum (17) untergebracht sind, wobei die Getriebegruppe (25) das mindestens eine Paar von elektrischen Maschinen (18), das Differentialgetriebe (55) und den Verbrennungsmotor (5) wirkend miteinander verbindet;
wobei die Achse **dadurch gekennzeichnet ist, dass**
das Gehäuse (7) mit dem Verbrennungsmotor (5) mittels einem Paar von seitlichen Trägern (11) verbunden ist, wobei die seitlichen Träger erste Endabschnitte, die mit dem Verbrennungsmotor (5) gelenkig verbunden sind, und zweite Endabschnitte aufweisen, die an dem Gehäuse (7) angebracht sind.

2. Achse nach Anspruch 1, wobei das Paar von elektrischen Maschinen (18) in das Gehäuse (7) integriert ist.

3. Achse nach Anspruch 1 oder 2, wobei das Gehäuse (7) einen ersten Abschnitt (7a), der dazu eingerichtet ist, an dem Verbrennungsmotor (5) angebracht zu sein, und einen zweiten Abschnitt (7b) aufweist, der von dem ersten Abschnitt (7a) fest getragen wird.

4. Achse nach Anspruch 3, wenn abhängig von Anspruch 2, wobei der zweite Abschnitt (7b) eine Unterstützung für entsprechende Statoren (18a", 18b") des mindestens einen Paars von elektrischen Maschinen (18) definiert.

5. Achse nach einem der vorhergehenden Ansprüche, wobei das mindestens eine Paar von elektrischen Maschinen (18) von dem Gehäuse (7) vertikal über der Getriebegruppe (25) getragen wird.

6. Achse nach einem der vorhergehenden Ansprüche, wobei das mindestens eine Paar von elektrischen Maschinen (18) symmetrisch bezüglich einer Ausgangwelle (9) des Verbrennungsmotors von dem Gehäuse (7) getragen wird.

7. Achse nach einem der vorhergehenden Ansprüche, wobei die Getriebegruppe (25) mit einem hinteren Getriebe (6) des Fahrzeugs mittels einer Vorgelegewelle (29) wirkend verbunden ist, wobei die Vorgelegewelle (29) unterhalb des Verbrennungsmotors angeordnet ist.

8. Achse nach Anspruch 7, wobei die Vorgelegewelle (29) seitlich innerhalb der seitlichen Träger (11) umfasst ist.

9. Achse nach Anspruch 3, wobei der zweite Abschnitt (7b) an einer gegenüberliegenden Seite des ersten Abschnitts (7a) entlang einer Längsachse einer Ausgangswelle (9) des Verbrennungsmotors (5) bezüglich des Verbrennungsmotors (5) angeordnet ist.

10. Achse nach einem der vorhergehenden Ansprüche, wobei das Gehäuse (7) eine vordere Zapfwelle (24) trägt, wobei die vordere Zapfwelle (24) mit der Getriebegruppe (25) wirkend verbunden ist.

11. Achse nach Anspruch 10 in Abhängigkeit von einem der Ansprüche 3 oder 9, wobei die vordere Zapfwelle (24) in dem zweiten Abschnitt (7b) vertikal unterhalb des mindestens einen Paars von elektrischen Maschinen (18) vorgesehen ist.

12. Achse nach einem der vorhergehenden Ansprüche, wobei die Radnaben (15) mit dem Gehäuse (7) starr verbunden sind.

13. Achse nach einem der Ansprüche 1 bis 11, wobei die Radnaben (15) von dem Gehäuse (7) jeweils in einer hängenden Weise getragen werden.

14. Landwirtschaftliches Fahrzeug (1), die einen Verbrennungsmotor (5), ein hinteres Getriebe (6), das von einem solchen Verbrennungsmotor (5) getragen wird, und eine Hybridantriebsvorderachse (3) nach einem der vorhergehenden Ansprüche aufweist.

## Revendications

1. Essieu moteur hybride avant (3) pour un véhicule agricole (1), ledit essieu moteur hybride avant (3) comprenant :
- un boîtier (7) configuré pour être fixé à un moteur à combustion interne (5) dudit véhicule agricole et définissant un espace intérieur (17) ;
- au moins une paire de machines électriques (18) connectées électriquement l'une à l'autre et une unité de commande électrique (19) connectée électriquement auxdites machines (18) pour en gérer le fonctionnement, ladite au moins une paire de machines électriques (18) et l'unité de commande électrique (19) étant portées par ledit boîtier (7) ;
- un engrenage différentiel (55) pour fournir un couple à une paire de moyeux de roue (15) portés par ledit essieu moteur hybride avant (3) ; et
- un groupe de transmission (25) comprenant une pluralité d'engrenages et d'arbres logés dans ledit espace intérieur (17), ledit groupe de transmission (25) connectant de manière opérationnelle ladite au moins une paire de machines électriques (18), ledit engrenage différentiel (55) et ledit moteur à combustion interne (5) ;
ledit essieu est **caractérisé en ce que** ledit boîtier (7) est connecté audit moteur à combustion interne (5) par une paire de bras latéraux (11), lesdits bras latéraux comprenant des parties d'une première extrémité articulées sur ledit moteur à combustion interne (5) et des parties d'une seconde extrémité fixées audit boîtier (7).

2. Essieu selon la revendication 1, dans lequel ladite paire de machines électriques (18) est intégrée audit boîtier (7)

3. Essieu selon la revendication 1 ou 2, dans lequel ledit boîtier (7) comprend une première partie (7a) configurée pour être fixée audit moteur à combustion interne (5) et une seconde partie (7b) portée de manière fixe par ladite première partie (7a).

4. Essieu selon la revendication 3 quand elle dépend de la revendication 2, dans lequel ladite seconde partie (7b) définit un support pour les stators respectifs (18a", 18b") de ladite paire de machines électriques (18).

5. Essieu selon l'une quelconque des revendications précédentes, dans lequel ladite au moins une paire de machines électriques (18) est portée par ledit boîtier (7) de manière verticale au-dessus dudit groupe de transmission (25).

6. Essieu selon l'une quelconque des revendications précédentes, dans lequel ladite au moins une paire de machines électriques (18) est portée par ledit boîtier (7) de manière symétrique par rapport à un arbre de sortie (9) dudit moteur à combustion interne (5)

7. Essieu selon l'une quelconque des revendications précédentes, où ledit groupe de transmission (25) est connecté de manière opérationnelle à une transmission arrière (6) dudit véhicule par l'intermédiaire d'un arbre de renvoi (29), ledit arbre de renvoi (29) étant placé sous ledit moteur à combustion interne.

8. Essieu selon la revendication 7, dans lequel ledit arbre de renvoi (29) est compris latéralement dans lesdits bras latéraux (11).

9. Essieu selon la revendication 3, dans lequel ladite seconde partie (7b) est placée à l'opposé de ladite première partie (7a) le long d'un axe longitudinal d'un arbre de sortie (9) dudit moteur à combustion interne (5) par rapport audit moteur à combustion interne (5).

10. Essieu selon l'une quelconque des revendications précédentes, dans lequel ledit boîtier (7) porte une prise de force avant (24), ladite prise de force avant (24) étant connectée de manière opérationnelle audit groupe de transmission (25).

11. Essieu selon la revendication 10 quand elle dépend de la revendication 3 ou 9, dans lequel ladite prise de force avant (24) est réalisée dans ladite seconde partie (7b) de manière verticale par rapport à ladite au moins une paire de machines électriques (18).

12. Essieu selon l'une quelconque des revendications précédentes, dans lequel lesdits moyeux de roue (15) sont connectés de manière rigide audit boîtier (7).

13. Essieu selon l'une quelconque des revendications 1 à 11, dans lequel lesdits moyeux de roue (15) sont chacun portés de manière suspendue par rapport audit boîtier (7).

14. Véhicule agricole (1) comprenant un moteur à combustion interne (5), une transmission arrière (6) portée par ce moteur à combustion interne (5) et un essieu moteur hybride avant (3) selon l'une quelconque des revendications précédentes.
